# EUROPÄISCHE PATENTSCHRIFT

(11) **EP 1 156 302 B1**
(45) Veröffentlichungstag und Bekanntmachung des Hinweises auf die Patenterteilung: **29.09.2004**
(21) Anmeldenummer: 01108921.6
(22) Anmeldetag: 10.04.2001
(51) Int. Cl.: G01F 23/284

(54) **Füllstandsmessgerät**
Level measuring device
Dispositif de mesure de niveau

(30) Priorität: 15.05.2000 DE 10023549; 15.06.2000 DE 10028807
(43) Veröffentlichungstag der Anmeldung: 21.11.2001
(73) Patentinhaber: KROHNE MESSTECHNIK GMBH & CO. KG, 47058 Duisburg (DE)
(72) Erfinder: Lübbers, Wilhelm, 26904 Börger (DE)
(74) Vertreter: Gesthuysen, von Rohr & Eggert

(56) Entgegenhaltungen:
- EP-A- 0 922 942
- DE-A- 19 617 963
- DE-U- 9 412 243
- US-A- 5 872 494

## Beschreibung

Die Erfindung betrifft ein Füllstandsmeßgerät, das nach dem Radarprinzip arbeitet, vorzugsweise zur Messung des Füllstands eines Mediums in einem Behälter, mit einem ein Mikrowellensignal erzeugenden Mikrowellengenerator, mit einem das Mikrowellensional führenden Hohlleiter, mit einem als Sende- und/oder Empfangsantenne wirkenden Hornstrahler, mit einem Impedanzwandler und mit einem Anschlußflansch, wobei der Hornstrahler auf der dem Medium zugewandten Seite des Anschlußflansches vorgesehen ist und der Impedanzwandler wenigstens teilweise in die Öffnung des Hornstrahlers hineinreicht. Ein solches Füllstandsmeßgerät ist aus der deutschen Gebrauchsmusterschrift 94 12 243 bekannt.

Allgemein sind neben den bekannten mechanischen Füllstandsmeßgeräten, die nach dem Schwimmer- oder Tastplatten-Prinzip arbeiten, seit geraumer Zeit Füllstandsmeßgeräte bekannt, die darauf beruhen, daß ein Schwingungswellengenerator Schwingungswellen aussendet, daß ein Schwingungswellendetektor die an der Oberfläche eines in einem Behälter befindlichen Mediums reflektierten Schwingungswellen detektiert und daß aus der für die Schwingungswellen ermittelten Laufzeit die Füllstandshöhe des Mediums in dem Behälter berechnet wird. Dazu wird verwiesen auf die deutschen Offenlegungsschriften 42 33 324, 43 27 333 und 44 19 462.

Füllstandsmeßgeräte der zuvor beschriebenen Art werden im allgemeinen als berührungslose Füllstandsmeßgeräte bezeichnet, da weder die Schwingungswellengeneratoren und die Schwingungswellendetektoren noch die Sendeantenne und die Empfangsantenne mit dem Medium in Berührung stehen müssen. Zumindest stehen die Sendeantenne und die Empfangsantenne wenigstens dann nicht mit dem in dem Behälter befindlichen Medium in Berührung, wenn der Behälter nicht überbefüllt ist.

Sämtliche bekannten, in der Regel berührungslos arbeitenden Füllstandsmeßgeräte arbeiten mit von ihnen ausgesandten Schwingungswellen, die von der Oberfläche des Mediums, dessen Füllstand zu messen ist, reflektiert werden. Bei den bekannten Verfahren zur Bestimmung des Füllstands unterscheidet man zwischen einerseits solchen, die die Phasenverschiebung zwischen den ausgesandten und den detektierten Schwingungswellen messen, und andererseits solchen, die unmittelbar die Laufzeit der Schwingungswellen messen. Bei der Laufzeitmessung unterscheidet man ferner im wesentlichen wiederum einerseits solche Füllstandsmeßgeräte, die die Laufzeit anhand von Schwingungswellen mit impulsmodulierten Amplituden messen, und andererseits solchen, die die Laufzeit anhand von frequenzmodulierten Schwingungswellen messen. Letztere bezeichnet man auch als Füllstandsmeßgeräte, die nach dem FMCW-Verfahren arbeiten.

Die hier interessierenden, berührungslos arbeitenden Füllstandsmeßgeräte, die nach dem Radarprinzip arbeiten, verwenden üblicherweise als Sendeantennen bzw. als Empfangsantennen einen Hornstrahler. Diesem wird das von einem Mikrowellengenerator erzeugte Mikrowellensignal typischerweise über einen Hohlleiter zugeführt. Um das von dem Hohlleiter geführte Mikrowellensignal über den Hornstrahler in den Behälter aussenden zu können, in dem sich das Medium befindet, wird im allgemeinen ein Impedanzwandler verwendet, in der deutschen Gebrauchsmusterschrift 94 12 243 auch Anschlußteil genannt, der derart ausgebildet und dimensioniert ist, daß ein möglichst ungestörter Übergang des Mikrowellensignals vom Hohlleiter auf den Hornstrahler mit möglichst wenig Reflektionen an diesem Übergang gewährleistet ist. Dazu reicht der Impedanzwandler typischerweise wenigstens teilweise in die Öffnung des Hornstrahlers hinein. Dabei ergibt sich jedoch das Problem, daß der Übergang zwischen dem Impedanzwandler einerseits und dem Hornstrahler andererseits abgedichtet werden muß, wenn das Füllstandsmeßgerät an einem zur Umgebung abgedichteten Behälter verwenden soll. Solche Anforderungen liegen insbesondere dann vor, wenn der Behälter ein chemisch aggressives Medium, ein Medium mit hoher Temperatur und/oder ein Medium unter hohem Druck aufweist.

Zur Lösung dieses Problems der Abdichtung des Übergangs zwischen dem Impedanzwandler einerseits und dem Hornstrahler andererseits ist in der deutschen Gebrauchsmusterschrift 94 12 243 beschrieben, die gesamte dem Medium in dem Behälter zugewandte Oberfläche des Hornstrahlers bzw. des Impedanzwandlers mit einer chemisch resistenten Schicht zu überziehen, die gleichzeitig abdichtend wirkt. Alternativ dazu ist dargestellt, zwischen dem Impedanzwandler einerseits und dem Hornstrahler andererseits ein System von Dichtungen in Form von O-Ringen vorzusehen. Diese Lösungen sind jedoch insofern nachteilig, als daß der Impedanzwandler fest mit dem Hornstrahler verbunden ist bzw. ein anfälliges zusätzliches Dichtungssystem zwischen dem Impedanzwandler und dem Hornstrahler vorgesehen werden muß.

Dementsprechend ist es die Aufgabe der Erfindung, ein solches Füllstandsmeßgerät, das nach dem Radarprinzip arbeitet, bereitzustellen, bei dem der Impedanzwandler leicht austauschbar ist und die Abdichtung zwischen dem Hornstrahler und dem Impedanzwandler auf einfache Weise sicher gewährleistet werden kann.

Das erfindungsgemäße Füllstandsmeßgerät, mit dem die zuvor aufgezeigte und hergeleitete Aufgabe gelöst ist, ist dadurch gekennzeichnet, daß eine Dichtungsplatte vorgesehen ist, die zwischen dem Hornstrahler und dem Anschlußflansch angeordnet ist und mit dem Impedanzwandler einstückig ausgebildet ist.

Bei der Montage des Füllstandsmeßgeräts an dem Behälter, also beim Zusammenfügen des Anschlußflansches des Füllstandsmeßgeräts mit dem diesem entsprechenden Flansch an dem Behälter durch Anziehen der Montageschrauben an den Flanschen, erfolgt die Abdichtung zwischen dem Impedanzwandler einerseits und dem Hornstrahler andererseits dadurch, daß die Dichtungsplatte beidseitig mit Druck beaufschlagt wird. Damit entsteht zwischen dem Anschlußflansch und dem Hornstrahler aufgrund der Dichtungsplatte eine dichte Verbindung, so daß, da die Dichtungsplatte und der Impedanzwandler erfindungsgemäß einstückig ausgebildet sind, auch durch den Übergang zwischen dem Impedanzwandler und dem Hornstrahler hindurch kein Medium aus dem Behälter entweichen kann. Dabei erfolgt die Dichtung zwischen dem Hornstrahler einerseits und dem Flansch des Behälters andererseits, wie auch bei herkömmlichen Füllstandsmeßgeräten, mit Hilfe von zwischen der Dichtfläche des Flansches des Behälters und der Dichtfläche des Hornstrahlers angeordneten Dichtelementen.

Während, wie oben schon ausgeführt, die sichere Abdichtung zwischen dem Hornstrahler einerseits und dem Impedanzwandler andererseits durch die Einstückigkeit dieser beiden Bauteile gewährleistet ist, liegt ein weiterer wesentlicher Vorteil der Erfindung darin, daß sich der Impedanzwandler - zusammen mit der Dichtungsplatte - im ausgebauten Zustand des Füllstandsmeßgeräts leicht austauschen läßt, ohne die zuvor genannte Dichtungsproblematik beachten zu müssen.

Um ihre abdichtende Wirkung erfüllen zu können, muß die Dichtungsplatte längs ihres gesamten Umfangs kontinuierlich die Dichtfläche des Anschlußflansches und die parallel zur Dichtfläche des Anschlußflansches verlaufende Dichtfläche des Homstrahlers bedecken. Dabei ist es grundsätzlich ausreichend, wenn die Dichtungsplatte die Dichtfläche des Anschlußflansches und die Dichtfläche des Hornstrahlers lediglich teilweise bedeckt. Gemäß einer bevorzugten Weiterbildung der Erfindung ist jedoch vorgesehen, daß die Dichtungsplatte die gesamte Dichtfläche des Hornstrahlers bedeckt. Aufgrund der dann besonders großen Dichtfläche wird eine noch bessere Abdichtung des Übergangs zwischen dem Hornstrahler einerseits und dem Impedanzwandler andererseits erzielt, so daß in dem Behälter auch Medien mit besonders hohen Drücken bevorratbar sind, ohne daß befürchtet werden muß, daß diese Medien im Bereich des an den Behälter angeschlossenen Füllstandsmeßgeräts nach außen gelangen.

Im allgemeinen sind für den Impedanzwandler sowie für die Dichtungsplatte alle solchen dielektrischen Materialien geeignet, die eine für den jeweiligen Einsatz des Füllstandsmeßgeräts ausreichend hohe Abdichtungseigenschaft aufweisen. Gemäß einer bevorzugten Weiterbildung der Erfindung ist jedoch vorgesehen, daß die Dichtungsplatte und der Impedanzwandler aus einem chemisch resistenten Kunststoff - vorzugsweise aus PTFE - bestehen. Sind die Dichtungsplatte und der Impedanzwandler aus PTFE hergestellt, ist gewährleistet, daß die Dichtung zwischen dem Hornstrahler einerseits und dem Impedanzwandler andererseits nicht aufgrund einer von aggressiven Chemikalien angefressenen Dichtungsplatte leck wird.

Gemäß einer bevorzugten Weiterbildung der Erfindung ist vorgesehen, daß die Dichtungsplatte auf ihrer dem Impedanzwandler gegenüberliegenden Seite eine Hohlleiterfüllung aufweist, die einstückig mit der Dichtungsplatte ausgebildet ist und über die das Mikrowellensignal in den Impedanzwandler einkoppelbar ist. Zwar kann eine Einkopplung des Mikrowellensignals in den Impedanzwandler auch ohne eine solche Hohlleiterfüllung erfolgen, jedoch müssen dann stärkere Verluste bzw. Störungen des Mikrowellensignals bei diesem Übergang in Kauf genommen werden. Bei dieser bevorzugten Weiterbildung der Erfindung ist die Hohlleiterfüllung vorzugsweise ebenfalls aus einem chemisch resistenten Kunststoff, vorzugsweise nämlich ebenfalls aus PTFE, hergestellt.

Der Hornstrahler ist im allgemeinen aus einem Metall, wie Edelstahl, Tantal, Titan oder Aluminium hergestellt. Erfindungsgemäß kann ein solcher Hornstrahler aus Metall ohne eine Beschichtung verwendet werden. Gemäß einer bevorzugten Weiterbildung der Erfindung ist jedoch vorgesehen, daß die gesamte in Kontakt mit dem Innenraum des Behälters stehende Oberfläche des Hornstrahlers mit einem Dielektrikum beschichtet ist. Auf diese Weise wird insbesondere ein guter Korrosionsschutz des Hornstrahlers erzielt. Bei der Beschichtung des Hornstrahlers mit dem Dielektrikum soll die Schichtdicke des Dielektrikums 2 mm nicht überschreiten, um somit keine solch hohen Aufladungen des Dielektrikums zu ermöglichen, die mit den vorgeschriebenen Explosionsschutzmaßnahmen nicht vereinbar wären. Bevorzugte Materialien für das Dielektrikum bestehen dabei aus Keramik, aus Kunststoff, nämlich vorzugsweise aus PTFE, PFA, FEP oder PVDF, und aus Email. An dieser Stelle sei ausdrücklich darauf hingewiesen, daß der Impedanzwandler zwar ebenfalls emailliert oder anderweitig beschichtet sein kann, eine solche Emaillierung bzw. anderweitige Beschichtung des Impedanzwandlers zu Abdichtungszwecken jedoch nicht erforderlich ist.

Bei einem Hornstrahler, dessen Oberfläche emailliert ist, ist gemäß einer bevorzugten Weiterbildung der Erfindung vorgesehen, daß eine bei der Beschichtung des Hornstrahlers mit Email, also der Emaillierung des Hornstrahlers, entstandene Aufhängeöse als Anschluß für eine Erdung des Hornstrahlers dient. Auf diese Weise wird die Erdung des Hornstrahlers nicht nur sehr einfach realisiert, nämlich insbesondere ohne eine Bohrung in dem Hornstrahler vorzusehen, sondern auch sehr effektiv, nämlich mit besonders guten Ableitungseigenschaften für die auf der beschichteten Oberfläche des Hornstrahlers entstehenden elektrischen Ladungen.

Im Zusammenhang mit einer Emaillierung des Hornstrahlers sei außerdem darauf hingewiesen, daß ein im Stand der Technik vorhandenes Problem bei emaillierten Hornstrahlem, nämlich ein Abblättern bzw. ein Abplatzen der Emailschicht unter Druckbeaufschlagung, erfindungsgemäß dadurch vermieden wird, daß nicht nur auf einer sondern auf beiden Seiten des Hornstrahlers Dichtelemente vorgesehen sind, die ausreichend nachgiebig sind, um die auf die Emailschicht wirkenden Kräfte abzufedern. Beim vorschriftsmäßigen Befestigen des Anschlußflansches des derart weitergebildeten Füllstandsmeßgeräts an dem Flansch des Behälters ist somit kein Abblättern bzw. Abplatzen der Emailschicht zu befürchten.

Es gibt nun eine Vielzahl von Möglichkeiten, das erfindungsgemäße Füllstandsmeßgerät auszusgestalten und weiterzubilden. Dazu wird einerseits auf die dem Patentanspruch 1 nachgeordneten Patentansprüche und andererseits auf die nachfolgende detaillierte Beschreibung eines bevorzugten Ausführungsbeispiels der Erfindung unter Bezugnahme auf die Zeichnung verwiesen. In der Zeichnung zeigt
- Fig. 1: eine Antenneneinrichtung eines Füllstandsmeßgeräts gemäß einem bevorzugten Ausführungsbeispiel der Erfindung in einer Explosionsdarstellung im Schnitt und
- Fig. 2: die Antenneneinrichtung des Füllstandsmeßgeräts gemäß dem bevorzugten Ausführungsbeispiel der Erfindung in zusammengebauten Zustand im Schnitt.

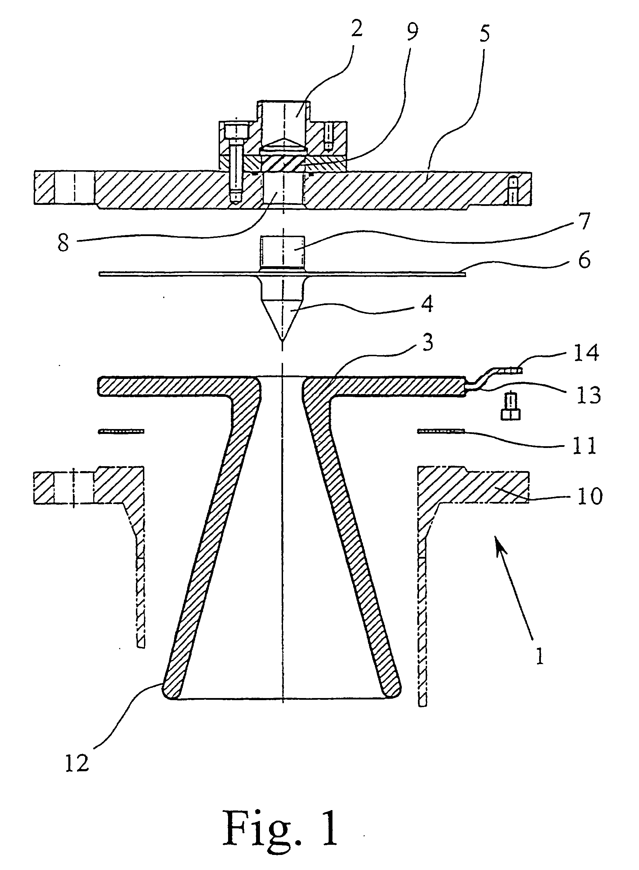

Aus Fig. 1 ist lediglich der Teil eines Füllstandsmeßgeräts gemäß einem bevorzugten Ausführungsbeispiel der Erfindung ersichtlich, der für die Erfindung wesentlich ist, nämlich die an einem Behälter 1 zu montierende Antenneneinrichtung des Füllstandsmeßgeräts. Nicht dargestellt in den Figuren ist also ein ein Mikrowellensignal erzeugender Mikrowellengenerator des Füllstandsmeßgeräts sowie ein reflektierte Mikrowellensignale empfangender Meßumformer.

Wie in den Figuren dargestellt, weist das Füllstandsmeßgerät einen Hohlleiter 2 auf, in den das von dem Mikrowellengenerator erzeugte Mikrowellensignal eingekoppelt und in dem das Mikrowellensignal dann weitergeführt wird. Das Füllstandsmeßgerät weist ferner einen Hornstrahler 3 aus Edelstahl auf, der gemäß dem vorliegend beschriebenen bevorzugten Ausführungsbeispiel der Erfindung als Sende- und Empfangsantenne wirkt. Ferner sind ein Impedanzwandler 4 und ein Anschlußflansch 5 vorgesehen. Durch den Hohlleiter 2 hindurch wird einerseits das von dem Mikrowellengenerator erzeugte Mikrowellensignal zum Anschlußflansch 5 hin geführt und andererseits, da der Hornstrahler 3 auch als Empfangsantenne wirkt, das am Medium reflektierte und von dem Hornstrahler 3 empfangene Mikrowellensignal zum ebenfalls nicht dargestellten Meßumformer hin geführt. Der vom Mikrowellengenerator und vom Meßumformer her kommende Hohlleiter 2 ist auf der dem Medium abgewandten Seite des Anschlußflansches 5 vorgesehen, während der Impedanzwandler 4 auf der dem Medium zugewandten Seite des Anschlußflansches 5 angeordnet ist.

Wie aus Figur 1 ersichtlich, ist der Impedanzwandler 4 einstückig mit einer Dichtungsplatte 6 und einer Hohlleiterfüllung 7 ausgebildet. Die Hohlleiterfüllung 7 führt zum Hohlleiter 2 hin, nämlich durch eine in dem Anschlußflansch 5 zentral vorgesehene Bohrung 8 hindurch, so daß die Einkopplung des Mikrowellensignals in den Impedanzwandler 4 von dem Hohlleiter 2 her über ein auf der dem Medium abgewandten Seite des Anschlußflansches 5 vorgesehenes Hohlleiterfenster 9 und die sich daran anschließende Hohlleiterfüllung 7 erfolgt.

Während die Dichtungsplatte 6 als Dichtelement zwischen der dem Medium zugewandten Dichtfläche des Anschlußflansches 5 des Füllstandsmeßgeräts und der dem Medium abgewandten Dichtfläche des Hornstrahlers 3 wirkt, dient als Dichtungselement zwischen der dem Medium zugewandten Dichtfläche des Hornstrahlers 3 und der Dichtfläche des Flansches 10 des Behälters 1 ein Dichtungsring 11.

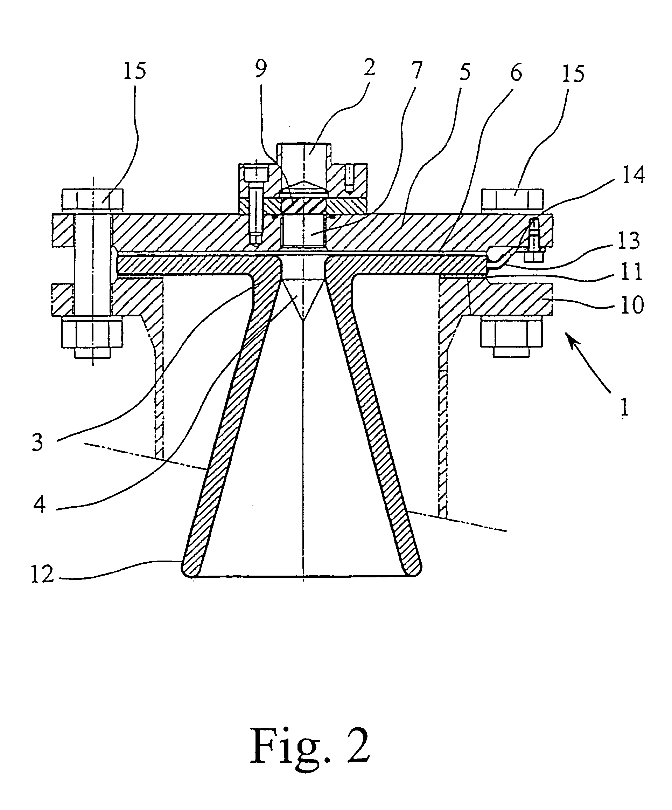

Der Hornstrahler 3 des in den Figuren 1 und 2 dargestellten Füllstandsmeßgeräts ist auf seiner gesamten Oberfläche emailliert. Die Schichtdicke dieser Emailschicht 12 auf dem Hohlleiter 3 beträgt 2 mm. Aus herstellungstechnischen Gründen ist der Homstrahler 3 gemäß dem vorliegend beschriebenen bevorzugten Ausführungsbeispiel der Erfindung auf seiner gesamten Oberfläche vollständig emailliert. Um einen guten Korrosionsschutz zu erzielen, ist jedoch die Emaillierung lediglich der Fläche des Hornstrahlers 3 ausreichend, die in Kontakt mit dem Innenraum des Behälters 1 kommt.

Bei der Beschichtung des Hornstrahlers 3 mit Email entsteht im allgemeinen eine Aufhängeöse 13. Bei dem Füllstandsmeßgerät gemäß dem dargestellten bevorzugten Ausführungsbeispiel der Erfindung ist dabei so vorgegangen worden, daß diese Aufhängeöse 13 gerade im äußeren Umfangsbereich der Anschlußplatte, also des Teils des Hornstrahlers 3, der zwischen dem Anschlußflansch 5 des Füllstandsmeßgeräts und dem Flansch 10 des Behälters 1 befestigt wird, entsteht. Dann kann diese Aufhängeöse 13 nämlich direkt für die Erdung des mit Email beschichteten Hornstrahlers 3 verwendet werden, indem an der Aufhängeöse 13 ein elektrischer Leiter 14 befestigt wird und zum Anschlußflansch 5 des Füllstandsmeßgeräts geführt und mit diesem fest verschraubt wird.

Es versteht sich von selbst, daß die zuvor beschriebene Verwendung der Aufhängeöse der Emailschicht nicht auf das erfindungsgemäße Füllstandsmeßgerät beschränkt ist, sondern bei allen Füllstandsmeßgeräten verwendet werden kann, die eine emaillierte Antenne aufweisen, die geerdet werden soll.

## Patentansprüche

1. Füllstandsmeßgerät, das nach dem Radarprinzip arbeitet, vorzugsweise zur Messung des Füllstands eines Mediums in einem Behälter (1), mit einem ein Mikrowellensignal erzeugenden Mikrowellengenerator, mit einem das Mikrowellensignal führenden Hohlleiter (2), mit einem als Sende- und/oder Empfangsantenne wirkenden Hornstrahler (3), mit einem Impedanzwandler (4) und mit einem Anschlußflansch (5), wobei der Hornstrahler (3) auf der dem Medium zugewandten Seite des Anschlußflansches (5) vorgesehen ist, der Impedanzwandler (4) wenigstens teilweise in die Öffnung des Hornstrahlers (3) hineinreicht und eine Dichtungsplatte (6) vorgesehen ist, die mit dem Impedanzwandler (4) einstückig ausgebildet ist, **dadurch gekennzeichnet, daß** die Dichtungsplatte (6) derart zwischen dem Hornstrahler (3) und dem Anschlußflansch (5) angeordnet ist, daß die Dichtungsplatte (6) als Dichtelement zwischen der dem Medium zugewandten Dichtfläche des Anschlußflansches (5) und der dem Medium abgewandten Dichtfläche des Hornstrahlers (3) wirkt, so daß zwischen dem Anschlußflansch (5) und dem Hornstrahler (3) aufgrund der Dichtungsplatte (6) eine dichte Verbindung erzielt wird.

2. Füllstandsmeßgerät nach Anspruch 1, **dadurch gekennzeichnet, daß** die Dichtungsplatte (6) die gesamte Dichtfläche des Hornstrahlers (3) bedeckt.

3. Füllstandsmeßgerät nach Anspruch 1 oder 2, **dadurch gekennzeichnet, daß** die Dichtungsplatte (6) und der Impedanzwandler (4) aus einem chemisch resistenten Kunststoff - vorzugsweise aus PTFE - bestehen.

4. Füllstandsmeßgerät nach einem der Ansprüche 1 bis 3, **dadurch gekennzeichnet, daß** die Dichtungsplatte (6) auf ihrer dem Impedanzwandler (4) gegenüberliegenden Seite eine Hohlleiterfüllung (7) aufweist, die einstückig mit der Dichtungsplatte (6) ausgebildet ist und über die das Mikrowellensignal in den Impedanzwandler (4) einkoppelbar ist.

5. Füllstandsmeßgerät nach Anspruch 4, **dadurch gekennzeichnet, daß** die Hohlleiterfüllung (7) aus einem chemisch resistenten Kunststoff - vorzugsweise aus PTFE - besteht.

6. Füllstandsmeßgerät nach einem der Ansprüche 1 bis 6, **dadurch gekennzeichnet, daß** die gesamte in Kontakt mit dem Innenraum des Behälters (1) stehende Oberfläche des Hornstrahlers (3) mit einem Dielektrikum beschichtet ist.

7. Füllstandsmeßgerät nach Anspruch 6, **dadurch gekennzeichnet, daß** die Schichtdikke des Dielektrikums maximal 2 mm beträgt.

8. Füllstandsmeßgerät nach Anspruch 6 oder 7, **dadurch gekennzeichnet, daß** das Dielektrikum aus Keramik besteht.

9. Füllstandsmeßgerät nach Anspruch 6 oder 7, **dadurch gekennzeichnet, daß** das Dielektrikum aus Kunststoff - vorzugsweise aus PTFE, PFA, FEP oder PVDF - besteht.

10. Füllstandsmeßgerät nach Anspruch 6 oder 7, **dadurch gekennzeichnet, daß** das Dielektrikum aus Email besteht.

11. Füllstandsmeßgerät nach Anspruch 10, **dadurch gekennzeichnet, daß** eine bei der Beschichtung des Hornstrahlers (3) mit Email entstandene Aufhängeöse (13) als Anschluß für eine Erdung des Hornstrahlers (3) dient.

## Claims

1. A fill level gauge, operating by the radar principle and preferably used for measuring the fill level of a medium in a container (1), incorporating a microwave generator for generating a microwave signal, a wave guide (2) for conducting the microwave signal, a horn radiator (3) serving as a transmitting and/or receiving antenna, an impedance transformer (4), and a connecting flange (5), where the horn radiator (3) is positioned on the near side of the connecting flange (5) facing the medium and the impedance transformer (4) extends at least partially into the opening of the horn radiator (3) and an obturator plate (6) is provided that is integrally formed with the impedance transformer, **characterized in that** the obturator plate (6) is positioned between the horn radiator (3) and the connecting flange (5) in such a manner that the obturator plate (6) serves as a seal between the contact surface of the connecting flange (5) facing the medium and the contact surface of the horn radiator (3) away from the medium, so that a secure seal is achieved between the connecting flange (5) and the horn radiator (3) due to the obturator plate (6).

2. The fill level gauge as in claim 1, **characterized in that** the obturator plate (6) covers the entire contact surface of the horn radiator (3).

3. The fill level gauge as in claim 1 or 2, **characterized in that** the obturator plate (6) and the impedance transformer (4) consist of a chemically resistant plastic, preferably PTFE.

4. The fill level gauge as in one of the claims 1 to 3, **characterized in that**, on its side opposite the impedance transformer (4), the obturator plate (6) is provided with a wave guide insert (7) which is an integral part of the obturator plate (6) and by way of which the microwave signal can be coupled into the impedance transformer (4).

5. The fill level gauge as in claim 4, **characterized in that** the wave guide insert (7) consists of a chemically resistant plastic, preferably PTFE.

6. The fill level gauge as in one of the claims 1 to 5, **characterized in that** the entire surface of the horn radiator (3) that is in contact with the inside of the container (1) is coated with a dielectric.

7. The fill level gauge as in claim 6, **characterized in that** the maximum thickness of the dielectric layer is 2 mm.

8. The fill level gauge as in claim 6 or 7, **characterized in that** the dielectric is a ceramic material.

9. The fill level gauge as in claim 6 or 7, **characterized in that** the dielectric is a plastic material, preferably PTFE, PFA, FEP or PVDF.

10. The fill level gauge as in claim 6 or 7, **characterized in that** the dielectric is an enamel.

11. The fill level gauge as in claim 10, **characterized in that** an eyelet (13) created in the process of coating the horn radiator (3) with enamel serves as a contact for grounding the horn radiator (3).

## Revendications

1. Limnimètre, qui travaille selon le principe du radar, pour la mesure du niveau d'un milieu dans un récipient (1), comprenant un générateur de micro-ondes générant un signal à micro-ondes, un guide d'ondes (2) guidant le signal à micro-ondes, une antenne à cornet (3) faisant office d'antenne d'émission et/ou d'antenne de réception, un convertisseur d'impédance (4) et une bride de raccordement (5), l'antenne à cornet (3) étant prévue sur le côté de la bride de raccordement (5), tourné vers le milieu, le convertisseur d'impédance (4) s'introduisant au moins en partie dans l'ouverture de l'antenne à cornet (3) et une plaque d'étanchéisation (6) étant prévue qui est réalisée en une seule pièce avec le convertisseur d'impédance (4), **caractérisé en ce que** la plaque d'étanchéisation (6) est disposée entre l'antenne à cornet (3) et la bride de raccordement (5), **en ce que** la plaque d'étanchéisation (6) fait office d'élément d'étanchéité entre la surface d'étanchéité de la bride de raccordement (5) tournée vers le milieu et la surface d'étanchéité de l'antenne à cornet (3) se détournant du milieu, de telle sorte que l'on obtient une liaison étanche entre la bride de raccordement (5) et l'antenne à cornet (3) sur base de la plaque d'étanchéisation (6).

2. Limnimètre selon revendication 1, **caractérisé en ce que** la plaque d'étanchéisation (6) recouvre toute la surface d'étanchéité de l'antenne à cornet (3).

3. Limnimètre selon la revendication 1 ou 2, **caractérisé en ce que** la plaque d'étanchéité (6) et le convertisseur d'impédance (4) sont constitués d'une matière synthétique résistant aux produits chimiques - de préférence de PTFE -.

4. Limnimètre selon l'une quelconque des revendications 1 à 3, **caractérisé en ce que** la plaque d'étanchéité (6), sur son remplissage de guide d'ondes (7), qui est réalisé en une seule pièce avec la plaque d'étanchéisation (6) et par lequel le signal à micro-ondes peut entrer en liaison avec le convertisseur d'impédance (4).

5. Limnimètre selon la revendication 4, **caractérisé en ce que** le remplissage de guide d'ondes (7) est constitué d'une matière synthétique résistant aux produits chimiques - de préférence de PTFE -.

6. Limnimètre selon l'une quelconque des revendications 1 à 5, **caractérisé en ce que** la surface totale de l'antenne à cornet (3) entrant en contact avec l'espace interne du récipient (1) est enduite d'un diélectrique.

7. Limnimètre selon la revendication 6, **caractérisé en ce que** l'épaisseur de couche maximale du diélectrique s'élève à 2 mm.

8. Limnimètre selon la revendication 6 ou 7, **caractérisé en ce que** le diélectrique est constitué de céramique.

9. Limnimètre selon la revendication 6 ou 7, **caractérisé en ce que** le diélectrique est constitué d'une matière synthétique - de préférence de PTFE, de PFA, de FEP ou de PVDF -.

10. Limnimètre selon la revendication 6 ou 7, **caractérisé en ce que** le diélectrique est constitué d'émail.

11. Limnimètre selon revendication 10, **caractérisé en ce qu'**un oeillet de suspension (13), que l'on obtient lors de l'enduction de l'antenne à cornet (3) avec de l'émail, fait office de raccord pour une mise à la terre de l'antenne à cornet (3).
